# EUROPÄISCHE PATENTSCHRIFT

(11) **EP 1 174 652 B1**
(45) Veröffentlichungstag und Bekanntmachung des Hinweises auf die Patenterteilung: **08.12.2004**
(21) Anmeldenummer: 01810558.5
(22) Anmeldetag: 11.06.2001
(51) Int. Cl.: F16L 13/14

(54) **Fitting oder Armatur mit einem Anschlussstutzen zur Aufnahme eines Rohrendes**
Fitting with a connecting piece for receiving the end of a pipe
Raccord avec un embout de connexion pour reçevoir l'extrémité d'un tuyau

(30) Priorität: 17.07.2000 CH 141100
(43) Veröffentlichungstag der Anmeldung: 23.01.2002
(73) Patentinhaber: GEBERIT TECHNIK AG, 8645 Jona (CH)
(72) Erfinder: Wegmann, Barbara, 8708 Männedorf (CH); Wili, Hansruedi, 8645 Jona (CH)
(74) Vertreter: Groner, Manfred

(56) Entgegenhaltungen:
- EP-A- 0 905 431
- WO-A-97/42440
- DE-U- 29 915 400
- US-A- 6 050 609

## Beschreibung

Die Erfindung betrifft einen Fitting oder eine Armatur mit einem Anschlussstutzen zur Aufnahme eines Rohrendes, das zur Bildung einer Pressverbindung mittels eines Presswerkzeuges radial bleibend verformbar ist.

Fittings und Armaturen dieser Art werden seit langem zum Erstellen von Wasserleitungen in der Haustechnik verwendet. Die Rohre sind hier insbesondere mehrschichtige Leitungsrohre mit einem Kern aus Aluminium. Mittels eines Presswerkzeuges werden die Rohrenden radial verpresst und damit dicht mit dem Fitting oder mit der Armatur verbunden. Solche Pressverbindungen haben sich an sich bewährt, da sie sehr einfach und schnell erstellt werden können. Um Bauschäden zu vermeiden, ist es wichtig, dass die Verpressung erfolgt und dass sie dauerhaft dicht ist.

In der DE 299 15 400 U1 wird zur Kontrolle der Verpressung vorgeschlagen, dass eine mit dem Presswerkzeug zusammenwirkende Aussenfläche des Anschlussstutzens mit einer Schicht aus mikroverkapselten Farbstoffen versehen ist. Bei der Durchführung des Pressvorganges werden die Kapseln durch das Presswerkzeug geöffnet, sodass Farbstoff ausfliessen kann. Der ausfliessende Farbstoff ergibt eine Markierung, die visuell erkennbar ist und an welcher feststellbar ist, dass ein Pressvorgang stattgefunden hat. Bei der Kontrolle eines Leitungssystems ist ein nicht erfolgter Pressvorgang an einem Fitting oder einer Armatur somit durch das Fehlen solcher Verfärbungen erkennbar.

Die EP 0 905 431 A offenbart eine Kupplungseinrichtung mit einer Löseeinrichtung, welcher ein Indikatorelement zugeordnet ist, das eine Verbindung der beiden Kupplungselemente anzeigt. Bei einer Ausführung ist an einem Kupplungselement eine Markierung angeordnet, die im nicht gekuppelten Zustand sichtbar ist und die im gekuppelten Zustand von einer Dichtungslippe der Löseeinrichtung abgedeckt wird und somit nicht sichtbar ist.

Der Erfindung liegt die Aufgabe zugrunde, einen Fitting oder einne Armatur zu schaffen, bei welcher eine visuelle Kontrolle noch einfacher und sicherer ist.

Die Aufgabe ist bei einem gattungsgemässen Fitting oder. Armatur gemäss Anspruch 1 gelöst. Das Kontrollmittel tritt somit vor dem Verpressen visuell in Erscheinung. Beim Verpressen wird das Kontrollmittel vom Fitting oder von der Armatur gelöst und ist somit nicht mehr sichtbar. Kontrolliert wird die Abwesenheit der visuellen Markierung. Ist ein Kontrollmittel an einem Fitting oder an einer Armatur noch vorhanden, so ist dies ein Hinweis auf eine nicht erfolgte Verpressung. Auf einen chemischen Farbstoffwechsel kann bei der Erfindung verzichtet werden. Als Kontrollmittel kann ein farblich auffallender Ring verwendet werden, der beim Verpressen gelöst und insbesondere weggesprengt wird. Wesentlich ist nun, dass das Vorhandensein einer visuellen Markierung einfacher und zuverlässiger feststellbar ist als das Vorhandensein einer vergleichsweise kleinflächigen farblichen Markierung.

Gemäss einer Weiterbildung der Erfindung ist das Kontrollmittel so ausgebildet, dass es im wesentlichen erst nach einer vollständigen Verpressung gelöst wird. Bei einer unvollständigen Verpressung, die zu einer Undichtigkeit führen würde, verbleibt das Kontrollmittel auf dem Fitting oder der Armatur. Dies ermöglicht somit eine Qualitätskontrolle, mit der unvollständige Verpressungen erkannt werden.

Ein besonders sicheres Lösen des Kontrollmittels ist dann gewährleistet, wenn gemäss einer Weiterbildung der Erfindung das Kontrollmittel einen bandförmigen Sprengring mit einer Schwächungsstelle, einem Verschluss oder dergleichen aufweist. Beim Verpressen springt der Sprengring durch einwirken des Presswerkzeuges auf und wird nach dem Abnehmen des Presswerkzeuges vorzugsweise in Folge einer inneren Spannung weggesprengt.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Fig. 1: ein Schnitt durch einen erfindungsgemässen Fitting sowie ein Abschnitt eines angesetzten Presswerkzeuges,
- Fig. 2: ein Schnitt entlang der Linie II-II der Fig. 1 und
- Fig. 3: ein Schnitt gemäss Fig. 2, jedoch nach der Verpressung und bei entferntem Presswerkzeug.

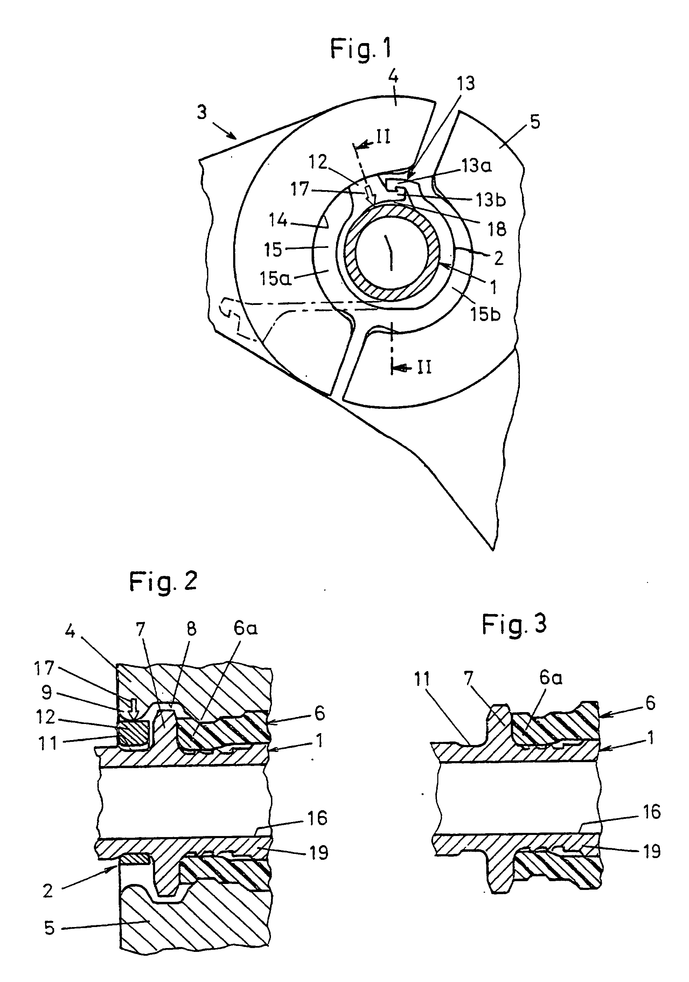

Der erfindungsgemässe Fitting 1, der auch ein Armaturteil sein kann, weist einen Anschlussstutzen 19 auf, an dem gemäss Fig. 2 ein Rohrende 6a eines Leitungsrohres 6 mittels einer Pressverbindung flüssigkeitsdicht anschliessbar ist. Der Fitting 1 weist einen Durchgang 16 für das Leitungswasser oder ein anderes Medium auf und ist vorzugsweise aus einem Kunststoff hergestellt. Er kann aber auch aus einem anderen Werkstoff beispielsweise aus Messing hergestellt sein und anstelle des Fittings ist hier auch ein Armaturenteil mit einem entsprechenden Anschlussstutzen 19 möglich. Ein solcher Armaturenteil könnte dann aus Messing hergestellt sein.

Das Rohrende 6a ist bis zu einem Anschlagflansch 7 auf den Anschlussstutzen 19 aufgeschoben. Zum Erstellen der Pressverbindung wird gemäss Fig. 1 ein Presswerkzeug 3 angesetzt, das von Hand oder hydraulisch angetrieben sein kann. Das Presswerkzeug weist in bekannter Weise wenigstens zwei Pressbacken 4 und 5 auf, die mit Innenflächen 14 eine Maulöffnung bilden und die zum radialen Verpressen des Rohrendes 6a gegeneinander bewegt werden. Hierbei wird das Rohrende 6a plastisch und bleibend verformt und mit dem Fitting 1 unlösbar verbunden. Ein hier nicht gezeigter eingelegter Dichtungsring kann vorgesehen sein.

Beim Pressvorgang werden die beiden Pressbacken 4 und 5 durch den radial vorspringenden Anschlagflansch 7 in einer korrespondierenden umlaufenden Vertiefung 8 geführt.

Gemäss den Fig. 2 und 3 ist neben dem Anschlagflansch 7 eine umlaufende Vertiefung 11 eingearbeitet, in die als Kontrollmittel ein Ring 2 eingelegt ist, der beispielsweise aus Kunststoff hergestellt ist und gemäss Fig. 1 mittels eines lösbaren Verschlusses 13 geschlossen ist. Der Verschluss 13 wird durch zwei hackenförmig Teile 13a und 13b gebildet, die gemäss Fig. 1 ineinander greifen. Unmittelbar neben dem Verschluss 13 ist ein Auslösenokken 12 angeformt, der wie ersichtlich radial nach aussen vorsteht. Der Auslösenocken 12 ist so ausgebildet, dass er beim Verpressen durch einen umlaufenden Wulst 9 in Richtung des Pfeils 17 nach innen bewegt wird. Diese Bewegung wird durch einen Zwischenraum 18 zwischen der Aussenseite des Fittings 1 und der Innenseite des Ringes 2 ermöglicht. Der Auslösenocken 12 und der Zwischenraum 18 sind zudem so ausgebildet, dass die Bewegung in Richtung des Pfeiles 17 unmittelbar vor der vollständigen Verpressung erfolgt. Bewegt sich der Auslösenocken 12 nach innen, so wird der Verschlussteil 13b ebenfalls gleichzeitig radial nach innen bewegt und damit löst sich sein Eingriff am verschlussteil 13a. Mit der Bewegung des Auslösenockens 12 in Richtung des Pfeiles 17 wird somit der Verschluss 13 gelöst. Der Ring 2 ist in der in Fig. 1 mit ausgezogenen Linien gezeigten Position gespannt. Ist der Verschluss 13 gelöst und das Presswerkzeug 3 abgenommen, so springt ein Bereich 15a sofort in die in Fig. 1 mit strichpunktierten Linien gezeigte Position und durch eine ähnliche Bewegung eines Bereichs 15b wird schliesslich der Ring 2 vom Fitting 1 weggesprengt. Der Ring 2 löst sich somit beim Verpressen und fällt nach dem Entfernen des Press-Werkzeuges 3 vom Fitting 1 weg. Wie die Fig. 1 deutlich zeigt, ist der Bereich 15a mit einer geringeren Wandstärke versehen als der Bereich 15b. Die Verminderung der Wandstärke im Bereich 15a bildet den eigentlichen rederelastischen Bereich und dieser gewährleistet nach einem Lösen des Verschlusses 13 das Wegspringen des Ringes 2.

Der Verschluss 13 könnte auch durch eine hier nicht gezeigte Schwächungslinie gebildet sein, die durch das Presswerkzeug 3 beim Verpressen durchgetrennt wird. Eine solche durchtrennbare Stelle ist auch beim Verschluss 13 gemäss Fig. 1 denkbar. Ein solcher Verschluss 13 wäre besonders schlagunempfindlich und könnte von Hand nicht gelöst werden.

Der Ring 2 weist vorzugsweise eine auffallende Farbgebung und insbesondere eine andere Farbgebung als der Fitting 1 bzw. das Armaturenteil auf. Beispielsweise kann der Fitting 1 schwarz und der Ring 2 weiss sein. Bei einer solchen auffallenden Farbgebung ist ein nicht weggesprengter Ring 2 an einem Leitungssystem visuell sehr leicht erkennbar. Ein solcher Ring 2 signalisiert, dass die Verbindung nicht oder ungenügend verpresst wurde. Der Ring 2 befindet sich wie ersichtlich ausserhalb des Bereichs, in dem das Rohrende 6a verpresst wird, jedoch im Bereich des Presswerkzeugs 4 und insbesondere im Bereich des Wulstes 9.

Die Herstellung und die Montage des Ringes 2 ist einfach und auch in grossen Serien möglich. Der Ring 2 kann im Spritzgussverfahren einstückig hergestellt werden und er lässt sich ohne weiteres automatisiert an einem Fitting lader Armaturenteil befestigen.

## Patentansprüche

1. Fitting oder Armatur mit einem Anschlussstutzen (19) zur Aufnahme eines Rohrendes (6a), das zur Bildung einer Pressverbindung mittels eines Presswerkzeuges (3) radial bleibend zu verformen ist, mit einem Kontrollmittel (2) zur Überprüfung der Verpressung, wobei das Kontrollmittel (2) im Eingriffsbereich des Presswerkzeuges (3) angeordnet und vor dem Verpressen visuell erkennbar ist, **dadurch gekennzeichnet, dass** das Kontrollmittel so ausgebildet ist, dass es beim Verpressen vom Fitting oder der Armatur gelöst und dadurch die visuelle Sichtbarkeit ganz oder im wesentlichen aufgehoben wird.

2. Fitting oder Armatur nach Anspruch 1, **dadurch gekennzeichnet, dass** das Kontrollmittel (2) neben einem Anschlagflansch (7) angeordnet ist.

3. Fitting oder Armatur nach Anspruch 1 oder 2, **dadurch gekennzeichnet, dass** das Kontrollmittel (2) als Ring ausgebildet ist.

4. Fitting oder Armatur nach einem der Ansprüche 1 bis 3, **dadurch gekennzeichnet, dass** das Kontrollmittel (2) vorgespannt ist und nach dem Lösen weggesprengt wird.

5. Fitting oder Armatur nach einem der Ansprüche 1 bis 4, **dadurch gekennzeichnet, dass** das Kontrollmittel (2) als bandförmiger Sprengring ausgebildet ist.

6. Fitting oder Armatur nach einem der Ansprüche 1 bis 5, **dadurch gekennzeichnet, dass** das Kontrollmittel (2) eine auffallend andere Farbgebung als benachbarte Bereiche aufweist.

7. Fitting oder Armatur nach einem der Ansprüche 1 bis 6, **dadurch gekennzeichnet, dass** das Kontrollmittel (2) einen Verschluss (13) aufweist, der beim vollständigen Verpressen gelöst wird und insbesondere aufspringt.

8. Fitting oder Armatur nach einem der Ansprüche 1 bis 7, **dadurch gekennzeichnet, dass** das Kontrollmittel (2) einen radial vorspringenden Nocken (12) aufweist, der beim Verpressen und insbesondere kurz vor dem vollständigen Verpressen zur Lösung des Kontrollmittels (2) radial nach innen bewegt wird.

9. Fitting oder Armatur nach einem der Ansprüche 1 bis 8, **dadurch gekennzeichnet, dass** das Kontrollmittel (6a) ausserhalb des Verpressungsbereichs des Rohrendes (6a) angeordnet ist.

10. Fitting oder Armatur nach Anspruch 9 sowie Presswerkzeug zum Bilden einer Pressverbindung mit dem Fitting oder der Armatur, **dadurch gekennzeichnet, dass** das Presswerkzeug (3) zwei Pressbacken aufweist, und das Kontrollmittel (2) im Eingriffsbereich der Pressbacken angeordnet ist.

## Claims

1. Fitting with a pipe connection (19) to receive a pipe end (6a) that is permanently radially deformable in order to form a compression joint by means of a pressing tool (3), with a checking means (2) to check the compression-shaping, whereby the checking means (2) is arranged in the region of engagement of the pressing tool (3) and is visually recognisable before the compression-shaping, **characterized in that** the checking means is constructed in such a way that it is removed from the fitting during the compression-shaping, and the visual visibility is entirely or essentially eliminated as a result.

2. Fitting according to Claim 1, **characterized in that** the checking means (2) is arranged alongside an end-stop flange (7).

3. Fitting according to Claim 1 or 2, **characterized in that** the checking means (2) is constructed as a ring.

4. Fitting according to one of the Claims 1 to 3, **characterized in that** the checking means (2) is pre-stressed and is sprung away after the separation.

5. Fitting according to one of the Claims 1 to 4, **characterized in that** the checking means (2) is constructed as a hoop-shaped bursting ring.

6. Fitting according to one of the Claims 1 to 5, **characterized in that** the checking means (2) has a colouring that is conspicuously different to the neighbouring regions.

7. Fitting according to one of the Claims 1 to 6, **characterized in that** the checking means (2) has a clasp (13) that is released and in particular springs open during complete pressure-shaping.

8. Fitting according to one of the Claims 1 to 7, **characterized in that** the checking means (2) has a radially projecting lug (12) that is moved radially inwards during pressure-shaping and in particular shortly before complete pressure-shaping, to remove the checking means (2).

9. Fitting according to one of the Claims 1 to 8, **characterized in that** the checking means (6a) is arranged outside of the pressure-shaping region of the pipe end (6a).

10. Fitting according to Claim 9 together with a pressing tool to produce a compression joint with the fitting, **characterized in that** the pressing tool (3) has two pressure jaws and the checking means (2) is arranged in the region of engagement of the pressure jaws.

## Revendications

1. Raccord ou élément de robinetterie comportant un embout de raccordement (19) destiné à loger une extrémité (6a) d'un tube, qui doit être déformée de façon permanente radialement pour la formation d'une liaison pressée à l'aide d'un outil de pressage (3), comportant un moyen de contrôle (2) pour vérifier la compression, le moyen de contrôle (2) étant disposé dans la zone d'application de l'outil de pressage (3) et étant identifiable visuellement avant le pressage, **caractérisé en ce que** le moyen de contrôle est agencé de telle sorte que lors du pressage il est détaché du raccord ou de l'élément de robinetterie et de ce fait la visibilité est supprimée totalement ou pour l'essentiel.

2. Raccord ou élément de robinetterie selon la revendication 1, **caractérisé en ce que** le moyen de contrôle (2) est disposé à côté d'une bride de butée (7).

3. Raccord ou élément de robinetterie selon la revendication 1 ou 2, **caractérisé en ce que** le moyen de contrôle (2) est agencé sous la forme d'un anneau.

4. Raccord ou élément de robinetterie selon l'une des revendications 1 à 3, **caractérisé en ce que** le moyen de contrôle (2) est précontraint et se déploie après le détachement.

5. Raccord ou élément de robinetterie selon l'une des revendications 1 à 4, **caractérisé en ce que** le moyen de contrôle (2) est agencé sous la forme d'un circlip en forme de bande.

6. Raccord ou élément de robinetterie selon l'une des revendications 1 à 5, **caractérisé en ce que** le moyen de contrôle (2) possède une coloration qui diffère, de façon voyante, de celle des zones voisines.

7. Raccord ou élément de robinetterie selon l'une des revendications 1 à 6, **caractérisé en ce que** le moyen de contrôle (2) comporte un dispositif de fermeture (13), qui est détaché lors du pressage complet et notamment se dégage brusquement.

8. Raccord ou élément de robinetterie selon l'une des revendications 1 à 7, **caractérisé en ce que** le moyen de contrôle (2) comporte un ergot (12) qui fait saillie radialement et qui, lors du pressage et notamment peu avant le pressage complet, fait saillie radialement vers l'intérieur, pour le détachement du moyen de contrôle (2).

9. Raccord ou élément de robinetterie selon l'une des revendications 1 à 8, **caractérisé en ce que** le moyen de contrôle (6a) est disposé à l'extérieur de la zone de pressage de l'extrémité (6a) du tube.

10. Raccord ou élément de robinetterie selon la revendication 9, et outil de pressage pour former une liaison pressée avec le raccord ou l'élément de robinetterie, **caractérisé en ce que** l'outil de pressage (11) comporte deux mâchoires de serrage, et que le moyen de contrôle (2) est disposé dans la zone d'application des mâchoires de serrage.
